(19) **Europäisches Patentamt / European Patent Office / Office européen des brevets**

(11) **EP 3 278 615 B1**

(12) **EUROPEAN PATENT SPECIFICATION**

(45) Date of publication and mention
of the grant of the patent:
**04.03.2020 Bulletin 2020/10**

(21) Application number: **16715627.2**

(22) Date of filing: **01.04.2016**

(51) Int Cl.:
*H04W 52/34* (2009.01)  *H04W 4/00* (2018.01)
*H04W 40/12* (2009.01)  *H04W 76/14* (2018.01)
*H04L 12/26* (2006.01)  *H04W 52/36* (2009.01)
*H04W 84/18* (2009.01)  *H04W 88/04* (2009.01)
*H04W 92/18* (2009.01)  *H04W 72/08* (2009.01)

(86) International application number:
**PCT/IB2016/051884**

(87) International publication number:
**WO 2016/157153 (06.10.2016 Gazette 2016/40)**

(54) **REPORTING FOR DIRECT LINK QUALITY ASSESSMENT**

BERICHTERSTATTUNG FÜR DIREKTVERBINDUNGSQUALITÄTSBEURTEILUNG

RAPPORTS POUR UNE ÉVALUATION DIRECTE DE QUALITÉ DE LIAISON

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **01.04.2015 US 201562141626 P
31.03.2016 US 201615086856**

(43) Date of publication of application:
**07.02.2018 Bulletin 2018/06**

(73) Proprietor: **Telefonaktiebolaget LM Ericsson
(PUBL)
164 83 Stockholm (SE)**

(72) Inventors:
• **KAROUT, Johnny
417 29 Göteborg (SE)**
• **ZAIDI, Ali
177 32 Järfälla (SE)**
• **SORRENTINO, Stefano
171 68 Solna (SE)**

(74) Representative: **Zacco Sweden AB
Valhallavägen 117
Box 5581
114 85 Stockholm (SE)**

(56) References cited:
**US-A1- 2003 204 587   US-A1- 2010 054 192
US-A1- 2014 213 306**

• **"3rd Generation Partnership Project; Technical
Specification Group Services and System
Aspects; Proximity-based services (ProSe);
Stage 2 (Release 12)", 3GPP DRAFT; 23303-C40,
3RD GENERATION PARTNERSHIP PROJECT
(3GPP), MOBILE COMPETENCE CENTRE ; 650,
ROUTE DES LUCIOLES ; F-06921
SOPHIA-ANTIPOLIS CEDEX ; FRANCE , 24
March 2015 (2015-03-24), XP050961167,
Retrieved from the Internet:
URL:http://www.3gpp.org/ftp/tsg_sa/WG2_Arc
h/Latest_SA2_Specs/Rel-12/ [retrieved on
2015-03-24]**

**Description**

Technical Field

The present disclosure relates to Device-to-Device (D2D) communication.

Background

A Power Headroom Report (PHR) is a parameter indicating how much transmission power is left for a User Equipment (UE) to use, taking into consideration the power being used by the current transmission per Component Carrier (CC). This power information is reported for all the active CCs to the evolved Node B (eNB) and it is used to estimate how much an uplink bandwidth can be used for a specific subframe.

There are two types of PHR: in Type 1, only the Physical Uplink Shared Channel (PUSCH) power is taken into consideration; whereas in Type 2, both the PUSCH and Physical Uplink Control Channel (PUCCH) are taken into consideration. These differences can be represented by the following:

Type 1: $P_{cmax,c}$ - PUSCH power
Type 2: $P_{cmax,c}$ - PUCCH power- PUSCH power

For a Primary Cell (PCell), a UE that has a parallel PUCCH and PUSCH configured, the UE always reports both types of PHRs. However, for a Secondary Cell (SCell), the UE always reports Type 1 PHR.

$P_{cmax,c}$ is reported together with all per-CC PHRs, therefore, overhead can be reduced in the cases where the $P_{cmax,c}$ is the same for multiple CCs or if $P_{cmax,c}$ is the same for Type 1 and 2 PHRs.

US 2003/0204587 A1 discloses a mobile ad hoc network comprising a plurality of wireless mobile nodes linked by wireless communication links. Traffic between nodes is tracked using traffic information generated by the nodes, wherein said traffic information may include at least one of error rate, end-to-end delay, end-to-end delay variation, hop count, expected path durability, and priority.

In a Long Term Evolution (LTE) communication network, the quality of radio link is normally assessed by performing Reference Signal Received Power (RSRP), Reference Signal Received Quality (RSRQ), and Received Signal Strength Indication (RSSI) measurements on the receiving node.

RSRP is the average power of Resource Elements (RE) that carry cell specific Reference Signals (RS) over the entire bandwidth. RSRP is only measured in the symbols carrying RS. Its typical range is around -44 to -130 decibel-milliwatts (dBm). This measurement is used in Radio Resource Control (RRC) Idle/Connected, Cell Reselection/Selection, and handover scenarios. Since RSRP measures the reference power, RSRP is the strength of the wanted signal. However, RSRP does not give any information about signal quality. RSRP gives the signal strength of the desired signal, not the quality of the signal. For quality of the signal information another parameter called RSSQ is used in some cases.

RSRQ is defined as (N x RSRP)/RSSI, where N is the number of Resource Blocks (RBs) over the measurement bandwidth. As such, this is not a direct measurement, but a value derived from the RSRP and the RSSI. Dividing RSRP by RSSI gives some information about interference in addition to the strength of the wanted signal. The RSSI parameter represents the entire received power including the wanted power from the serving cell as well as all co-channel power and other sources of noise. Measuring RSRQ becomes particularly important near the cell edge when decisions need to be made, regardless of absolute RSRP, to perform a handover to the next cell. RSRQ is used only during connected states. Intra- and inter-frequency absolute RSRQ accuracy varies from $\pm 2.5$ to $\pm 4$ decibels (dB), which is similar to the inter-frequency relative RSRQ accuracy of $\pm 3$ to $\pm 4$ dB.

RSSI is a parameter that provides information about total received wide-band power (measure in all symbols) including all interference and thermal noise. RSSI is the total power a UE observes across the whole band. RSSI includes the main signal and co-channel non-serving cell signal, adjacent channel interference and even the thermal noise within the specified band. RSSI is the power of the non-demodulated signal, so a UE can measure this power without any synchronization and demodulation. In LTE, RSRP provides information about signal strength and RSSI helps in determining interference and noise information. This is the reason that RSRQ is based on both RSRP and RSSI.

Summary

Systems and methods for reporting a direct link quality assessment are disclosed. An embodiment provides a method of operation of a wireless device in a wireless communications as defined in claim 1.

In some embodiments, a wireless device in a wireless communications network includes one or more processors and memory, as defined in claim 12.

Brief Description of the Drawings

The accompanying drawing figures incorporated in and forming a part of this specification illustrate several aspects of the disclosure, and together with the description serve to explain the principles of the disclosure.

Figure 1 illustrates a wireless communication network with multiple wireless devices and a network node, according to some embodiments of the present disclosure;

Figure 2 is a schematic diagram of an example path switching from a network node to a wireless device relay;

Figure 3 illustrates a process for determining a direct link quality assessment, according to some embodiments of the present disclosure;

Figure 4 illustrates a process for reporting a direct link quality assessment, according to some embodiments of the present disclosure;

Figure 5 illustrates a process for reporting a direct link quality assessment in a multi-hop communication path, according to some embodiments of the present disclosure;

Figure 6 is a diagram of a network node;

Figure 7 is a diagram of a wireless device according to some embodiments of the present disclosure; and

Figure 8 is a diagram of a wireless device;

Detailed Description

The embodiments set forth below represent information to enable those skilled in the art to practice the embodiments and illustrate the best mode of practicing the embodiments. Upon reading the following description in light of the accompanying drawing figures, those skilled in the art will understand the concepts of the disclosure and will recognize applications of these concepts not particularly addressed herein. It should be understood that these concepts and applications fall within the scope of the disclosure and the accompanying claims.

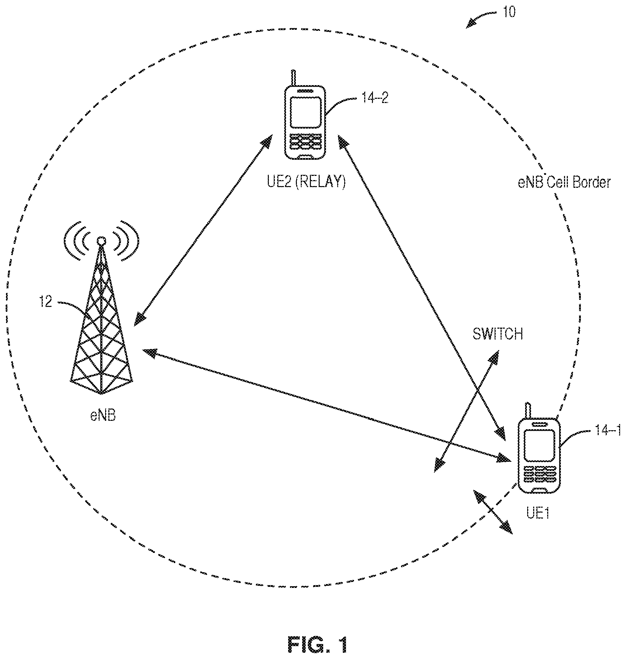

Figure 1 illustrates a wireless communication network 10 with a network node 12 and multiple wireless devices 14-1 and 14-2, according to some embodiments of the present disclosure. In some embodiments, the wireless devices are referred to as User Equipment (UE) 14-1 and 14-2 (sometimes referred to herein as UE 14 and UEs 14) and the network node is referred to as a Base Station (BS) 12 or evolved Node B (eNB) 12. While the term UE is generally used herein, a UE may be any type of wireless device which is capable of at least communication through wireless communication. Examples of such UEs are sensors, modems, smart phones, Machine Type Communication (MTC) devices also referred to as Machine-to-Machine (M2M) devices, PDAs, iPads, tablets, Laptop Embedded Equipment (LEE), Laptop Mounted Equipment (LME), Universal Serial Bus (USB) dongles etc.

Notably, much of the discussion herein focuses on embodiments in which the wireless communications network 10 is a 3rd Generation Partnership Project (3GPP) Long Term Evolution (LTE) cellular communications network. As such, 3GPP terminology is oftentimes used herein. However, while the embodiments described herein focus on 3GPP LTE, the embodiments and concepts disclosed herein may be used in any suitable type of existing or future cellular communications network including, for example, 3rd Generation (3G) networks (e.g. Universal Mobile Telecommunications System (UMTS)), 4th Generation (4G) networks (Worldwide Interoperability for Microwave Access (WiMAX), LTE, Long Term Evolution Advanced (LTE-A)), 5th Generation (5G) or other future networks.

In Figure 1, eNB 12 is shown serving a first UE 14-1 and a second UE 14-2. In this example, UE 14-1 is on or near the eNB cell border. As such, UE 14-1 might be able to obtain a better signal by using UE 14-2 as a relay to communicate with the eNB 12. This communication between the UE 14-1 and UE 14-2 may use a Device-to-Device (D2D) communication link. D2D communication is a component of many existing wireless technologies, including ad hoc and cellular networks. Examples include Bluetooth and several variants of the IEEE 802.11 standards suite such as WiFi Direct. These systems operate in unlicensed spectrum. While this disclosure uses the term D2D, equivalent terms are sometimes used, such as sidelink, peer to peer, etc.

Recently, D2D communications (also defined as ProSe Direct Communication) as an underlay to cellular networks have been proposed as a means to take advantage of the proximity of communicating devices and at the same time to allow devices to operate in a controlled interference environment. Typically, it is suggested that such D2D communication shares the same spectrum as the cellular system, for example, by reserving some of the cellular uplink resources for D2D purposes. Allocating dedicated spectrum for D2D purposes is a less likely alternative as spectrum is a scarce resource and (dynamic) sharing between the D2D services and cellular services is more flexible and provides higher spectrum efficiency.

The transmission mode when sending data during D2D communication may be either:

- Unicast - a specific UE 14 is the receiver
- Multicast (may also be denoted group-cast) - a group of UEs 14 are receivers

- Broadcast - all UEs 14 are receivers

With connectionless D2D communication, data can be sent from one device to another device without prior arrangement, thereby reducing the overhead and increasing the communication capacity which is crucial in emergency situations. The source device transmits data to one (unicast) or more (multicast/group-cast/broadcast) other devices, without first ensuring that the recipients are available and ready to receive the data. Connectionless communication may be used for one-to-one or one-to-many communication, but it is particularly effective for multicast and broadcast transmissions and thus well-suited for broadcast and group communication. The connectionless communication may be realized, for example, via Physical (PHY) unicast/multicast/group-cast/broadcast transmissions; with PHY broadcast transmissions, the transmissions may still be turned into unicast/group-cast/multicast at higher layers. For example, in the Media Access Control (MAC) layer, multicast or even unicast addresses may be used. Or alternatively, if using broadcast on both PHY and MAC, multicast or unicast IP addresses may be used at the Internet Protocol (IP) layer.

When a UE is in network coverage, any D2D communication is controlled by the network nodes (such as the eNB 12). Since the radio resources in a cell (especially for the uplink resources) are shared between traditional cellular communication and D2D communication, the eNB 12 should divide and assign the radio resources in case of D2D communication, in case the UEs 14 are in coverage. In 3GPP Rel-12, the ProSe UE Information message has been introduced as part of the Radio Resource Control (RRC) protocol. This message is used whenever the UE needs to inform the eNB about ProSe communication or ProSe Discovery. For communication, it contains a list of ProSe destinations and an index associated to each of these. In case of multicast communication, a ProSe destination is a ProSe Layer 2 Group identity and for unicast communication it is a ProSe UE Identity. The index may later be used as a 4 bit short reference to a given group or unicast destination, e.g., as used in the MAC Buffer Status Report when transmitting data to the destination.

Moreover, a given unicast traffic session between two UEs 14 may use either a direct communication path or an infrastructure communication path. When using the direct communication path, the data is transmitted directly between the UEs 14 using D2D communication. On the other hand, when using the infrastructure communication path, the data is instead transmitted via the network nodes. The latter case is only available when both UEs 14 are in coverage by the network.

A service continuity switch is the procedure to move a user traffic session from the direct communication path to the infrastructure communication path, or vice versa. In 3GPP Rel-13, service continuity switching will likely be included. "Direct communication path" implies that the transmitted packets use D2D communication (sidelink) channels. "Infrastructure communication path" implies that the packets use the non-D2D, legacy, physical (uplink and downlink) channels and also that the packets are transmitted over an Evolved Packet System (EPS) bearer, which is effectively a tunnel between the UE and the Packet Data Network Gateway (PDN GW) network node.

ProSe communication is introduced into 3GPP at Rel-12. One potential topic in Rel-13 would be the service continuity, i.e., service continuity between infrastructure and ProSe Direct Communication paths, which can be divided into two different scenarios, each of which are representative scenarios addressed by embodiments of the present disclosure:

Scenario One ("One UE 14"): A user traffic session is kept even when a UE 14 goes between in coverage and out of coverage (inside and outside the eNB cell border shown in Figure 1). In this scenario, the mobility is limited to one UE 14-1, and the other UE 14-2 acts as the relay between the remote UE 14-1 and the eNB 12. In this scenario UE 14-2 is here defined as the "relay UE" of UE 14-1, and UE 14-1 the "remote UE" of UE 14-2.

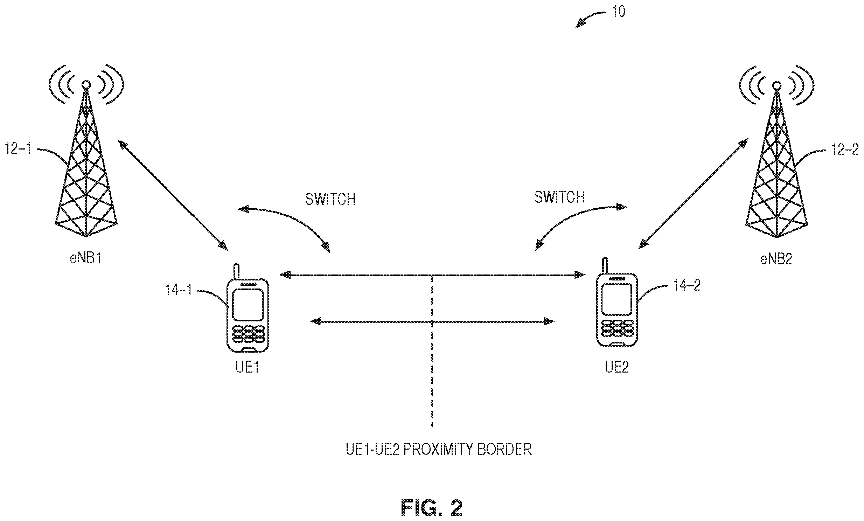

Figure 2 is a schematic diagram of an example path switching from a network node to a wireless device relay, according to some embodiments of the present disclosure. As shown, UE 14-1 may be connected to eNB 12-1, and UE 14-2 may be connected to eNB 12-2. This illustrates the second scenario:

Scenario Two ("Two UEs 14"): To switch into ProSe Direct Communication path between two UEs 14 that are in coverage an eNB 12 when the two UEs 14 come within proximity of each other. In this scenario, the mobility of both UEs 14 would be considered. For this scenario, UE 14-2 is here defined as the "peer UE" of UE 14-1, and the other way around.

Radio-proximity related measurements between devices can be exploited in the above scenarios for determining the multi-hop route or to switch the communication path between direct and cellular communication.

While the operations at the transmitter are mostly specified according to a standard, the operations at the receiver are mostly up to UE 14 implementation.

Using the existing technology, the receiving UE 14 can perform power related measurements similar to RSRP/RSRQ on signals transmitted from another UE 14 to assess the quality of cellular as well as direct communication links. These link quality assessments may be used to determine the multi-hop route or switch the communication path between direct and cellular communication.

However, link selection that is solely based on radio measurements of received power is not sufficient to guarantee that the desired services will be provided reliably.

Therefore, systems and methods for reporting a direct link quality assessment are disclosed. In some embodiments, a method of operation of the wireless device 14 in the wireless communications network 10 includes determining one or more parameters for a D2D communication link with the first wireless device 14 and determining one or more services supported over the D2D communication link with the first wireless device 14 based on the one or more parameters. In this way, the wireless device 14 may be able to tune communication parameters, enabling a better service and/or the wireless device 14 may determine whether a service can be supported or not. Additionally, in a multi-hop D2D scenario with several wireless devices 14 connected in series, the wireless device 14 may determine aggregate best/worst/estimated supported service information at a given hop.

Aspects of some embodiments are directed to PHR reporting on the sidelink between UEs 14 in proximity. Aspects of some embodiments are also directed to calculating PHR, conveying PHR, and using PHR to tune parameters and facilitating better service.

Another aspect of some embodiments is related to how such reports may be used by a node to determine whether a service can be supported or not.

In the multi-hop D2D scenario with several devices connected in series, some embodiments include reporting the aggregate best/worst/estimated supported service information at a given hop to the receiving device in the upcoming hop.

By enabling PHR reporting and Supported Service reporting over the direct links, the user or higher layers within the device become aware of the supported service and the supported quality. Therefore, an appropriate direct link or a multi-hop route can be selected either by the UE 14 automatically or by a user manually. Furthermore, some transmission parameters such as Modulation and Coding Schemes (MCS) and/or transmit powers can be calibrated to make the best use of the direct links.

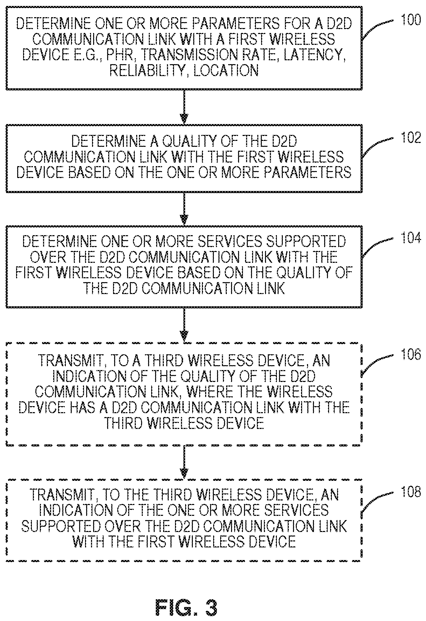

In this regard, Figure 3 illustrates a process for determining a direct link quality assessment, according to some embodiments of the present disclosure. First, a UE 14-1 determines one or more parameters for a D2D communication link with a first UE 14-2 (step 100). For example, these parameters may include PHR, transmission rate, latency, reliability, location, etc. Then, in some embodiments, the UE 14-1 determines a quality of the D2D communication link with the first UE 14-2 based on the one or more parameters (step 102). The UE 14-1 may then determine one or more services supported over the D2D communication link with the first UE 14-2 based on the quality of the D2D communication link (step 104). In some embodiments, the UE 14-1 instead determines the one or more services supported over the D2D communication link with the first UE 14-2 based on the one or more parameters without explicitly determining a quality of the D2D communication link.

In some embodiments, the UE 14-1 may use this information as discussed herein. In some embodiments where a multi-hop communication link is being used, UE 14-1 transmits, to a third UE 14-3, an indication of the quality of the D2D communication link, where the UE 14-1 has a D2D communication link with the third UE 14-3 (step 106). In addition or in the alternative, the UE 14-1 may transmit, to the third UE 14-3, an indication of the one or more services supported over the D2D communication link with the first UE 14-2 (step 108).

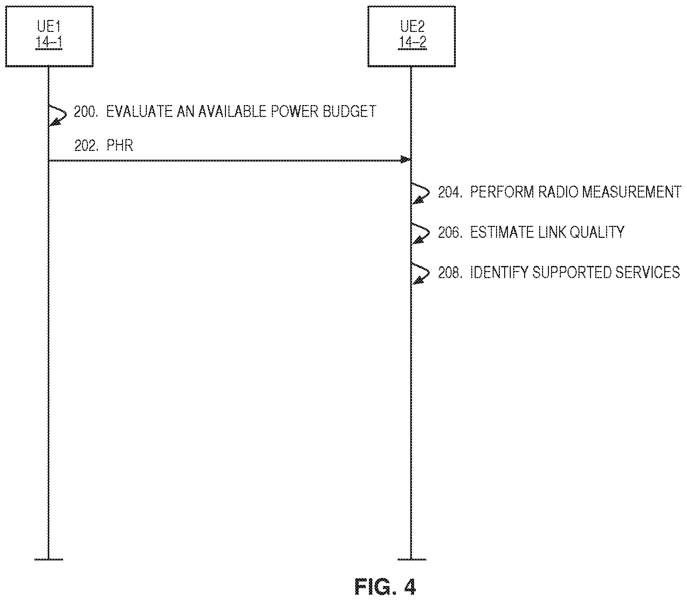

Figure 4 illustrates a process for reporting a direct link quality assessment, according to some embodiments of the present disclosure. In Figure 4, for notation purposes, UE 14-1 is a transmitter and UE 14-2 is a receiver. At UE 14-1, embodiments include evaluating an available power budget (step 200) and signaling the PHR to the receiver (step 202). One difference compared to legacy PHR is that in this case the report may be provided on a direct control channel between UE 14-1 and UE 14-2 for the purpose of proximity detection or evaluation of potential link quality for a D2D link. Another difference is that the proposed PHR may be defined as $P_{cmax,c}$ -D2D power, where $P_{cmax,c}$ indicates the available power for carrier c (equivalently, a $P_{cmax}$ reflecting the total UE 14 power budget can be used) and "D2D power" is the power used for D2D transmission of the channel used for D2D reporting (e.g., a discovery or communication D2D channel). A further difference is that in legacy PHR, the device performs a measurement or estimation of the PHR for a certain subframe and provides the report at a later subframe. In some embodiments of this disclosure, instead, the PHR report refers to the same subframe where the report takes place. Since the UE 14 is unable to simultaneously measure the available power and report it, the PHR is calculated by the UE 14 before the report and thus is based on a prediction of the value of the PHR during the reported subframe. In some embodiments, the value $P_{cmax,c}$ can be reported alongside the PHR

Returning now to Figure 4, the receiver side UE 14-2 receives the PHR over a direct control channel from UE 14-1 (transmitting device). The UE 14-2 performs a radio measurement based at least on received signals and/or control information from another device over a D2D channel (step 204). The UE 14-2 then estimates the quality of the potential direct link connection based on such measurement (step 206).

In some embodiments, the UE 14-2 optionally identifies which services, if any, may be supported by the potential direct communication link based at least on the quality estimate (step 208). Such information may be indicated to higher layers in the device or to the user, for example for the purpose of allowing/disallowing/tuning the parameters of certain services.

In some embodiments, the reported PHR and the link quality estimate can be used to predict the best service that can be supported over the direct communication link. This is possible since the reported PHR can indicate how many more Resource Blocks (RBs) can be used in the transmission in order to provide higher data rate or increased reliability. An example is given below, describing how this might be accomplished.

Consider that the power control algorithm/formula has the following form:

$$P_t = \min\{P_{cmax,c}, P'(PL, MCS) + \log(M)\},$$

where $P_t$ is the transmit power, $P'(PL, MCS)$ is a function of path-loss, MCS or transmission format, and $M$ is the transmission bandwidth in terms of number of RBs. The uplink power control formula in LTE has the above mentioned form, conceptually if PHR is defined as: $PHR = P_{cmax,c} - P_t$. Assuming that the receiver device knows $PHR$ and can estimate $P'(PL, MCS)$, since path-loss can be estimated and transmission format is known, then the receiver device can determine how many additional RBs $M_{additional}$ can be transmitted (without reducing transmission power per resource block) by solving the following equation:

$$PHR + \log(M) = \log(M + M_{additional})$$

The solution of the above equation can be rounded off to an integer value $M_{additional}$. Note that if one uses a number of RBs greater than $M_{additional}$, then the transmit power per RB will reduce.

In some embodiments, PHR can be used to estimate reliability of the direct link, since the PHR provides the transmit power margin.

The potentially supported services or indication of the direct link quality may be reported to another node (e.g., another UE 14 or an eNB 12 or access point) in order to select or confirm routes for a multi-hop transmission.

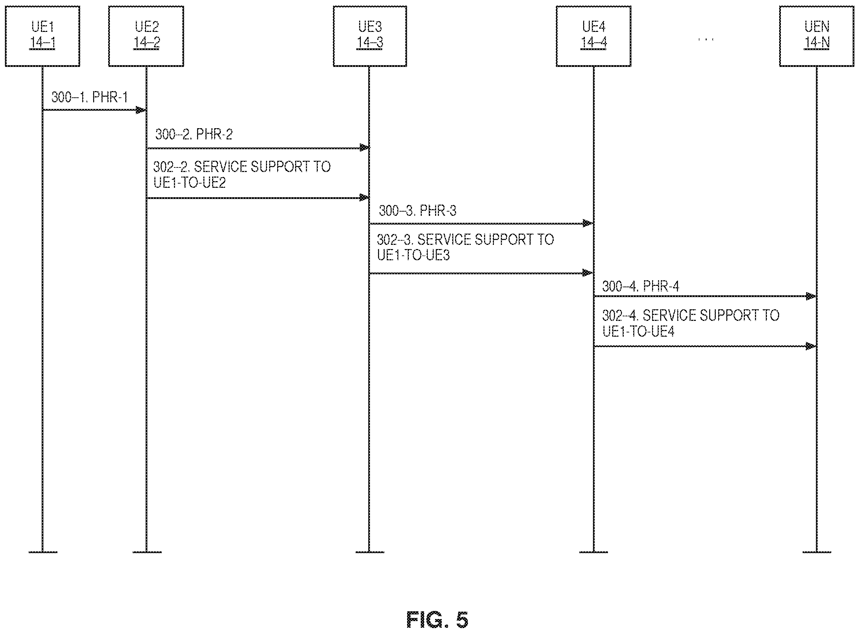

In a multi-hop scenario where several devices are connected to form a single route, a UE 14 can communicate information about the overall service that can be supported over the preceding hops to the UE 14 in the following hop (upcoming hop). An example with multiple UEs 14 is shown in Figure 5.

Figure 5 illustrates a process for reporting a direct link quality assessment in a multi-hop communication path, according to some embodiments of the present disclosure. UE 14-1 sends its PHR to UE 14-2 (step 300-1). As discussed earlier, PHR and other radio measurements can be used at a receiving UE 14-2 to calculate supported service for the current hop.

The service supported at the current hop can be combined with the information about the aggregate service that can be supported over the previous hops to estimate the aggregate supported service that can be supported from the first UE 14-1 to the currently receiving device UE 14-2. The current PHR is sent to UE 14-3 (step 300-2) and the aggregate supported service can also be reported to the receiving UE 14-3 of the next hop (step 302-2). In some embodiments, during this process, the candidate D2D links that do not meet the minimum service requirement can be discarded without further exploring the upcoming hops.

Figure 5 illustrates shows this continuing for several UEs 14. Specifically, UE 14-3 sends its PHR (step 300-3) and again sends the new aggregated supported services (step 302-3). This is again repeated until the last UE 14 in the multi-hop link, which is shown as UE 14-N, receives a PHR (step 300-4) and the service support of the previous links (step 302-4).

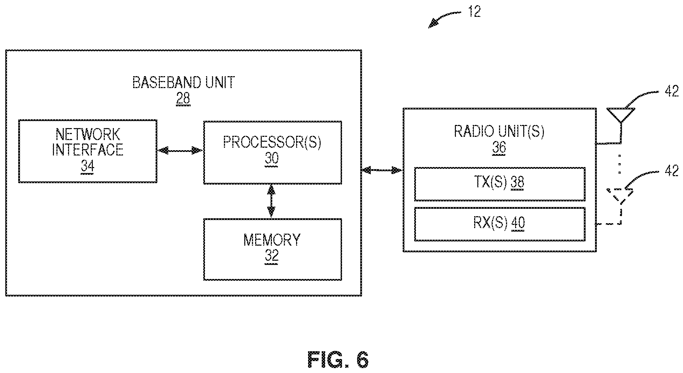

Figure 6 is a diagram of a network node 12. As used herein, this network node 12 may be a BS 12, an eNB 12, or any other network node capable of performing the processes discussed herein. The network node 12 may include circuitry containing instructions, which when executed, cause the network node 12 to implement the methods and functionality described herein. In one example, the circuitry can be in the form of processing means which may include a processor and a memory containing instructions. As illustrated, the network node 12 includes a baseband unit 28 that includes at least one processor 30 and memory 32. The baseband unit 28 also includes a network interface 34. As illustrated, the network node 12 also includes a radio unit 36 with one or more transmitters 38, one or more receivers 40, and one or more antennas 42. In some cases, the network node 12, or the functionality of the network node 12, is implemented in software that is stored in, e.g., the memory 32 and executed by the processor 30. The network interface 34 may include one or more components (e.g., network interface card(s)) that connect the network node 12 to other systems.

A computer program including instructions which, when executed by the at least one processor 30, causes the at least one processor 30 to carry out the functionality of the network node 12. A carrier containing the aforementioned computer program product can be one of an electronic signal, an optical signal, a radio signal, or a computer readable storage medium (e.g., a non-transitory computer readable medium such as the memory 32).

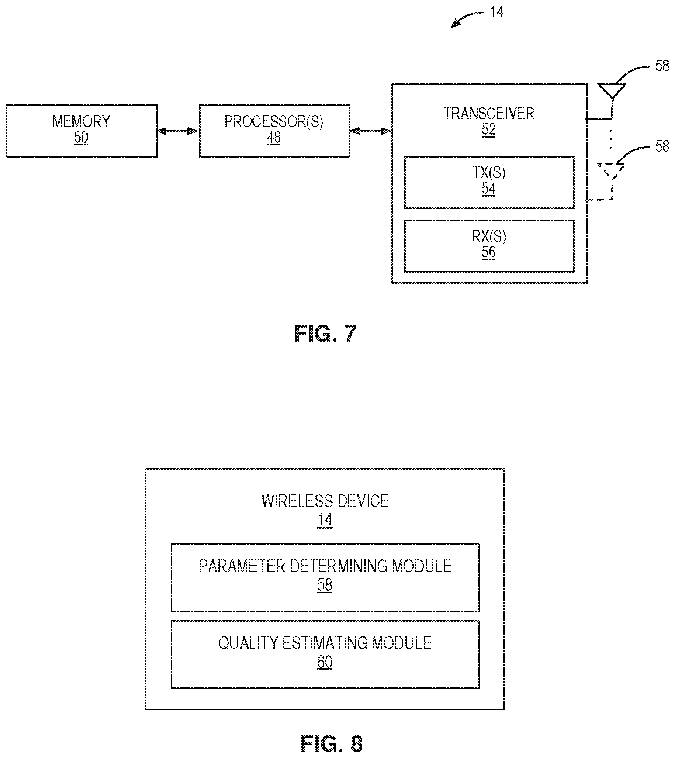

Figure 7 is a diagram of a wireless device according to some embodiments of the present disclosure. As used herein, this wireless device 14 may be a UE 14 or any other device capable of performing the processes discussed herein. As illustrated, the wireless device 14 includes at least one processor 48 and memory 50. The wireless device 14 also includes a transceiver 52 with one or more transmitters 54, one or more receivers 56, and one or more antennas 58. In some embodiments, wireless device 14, or the functionality of the wireless device 14 described with respect to any one of the embodiments described herein, is implemented in software that is stored in, e.g., the memory 50 and executed by the processor 48. The transceiver 52 uses the one or more antennas 58 to transmit and receive signals and may include one or more components that connect the wireless device 14 to other systems.

In some embodiments, a computer program including instructions which, when executed by at least one processor 48, causes the at least one processor 48 to carry out the functionality of the wireless device 14 according to any one of the embodiments described herein is provided. In some embodiments, a carrier containing the aforementioned computer program product is provided. The carrier is one of an electronic signal, an optical signal, a radio signal, or a computer readable storage medium (e.g., a non-transitory computer readable medium such as the memory 50).

Figure 8 is a diagram of a wireless device 14 including a parameter determining module 58 and a quality estimating module 60. The parameter determining module 58 and a quality estimating module 60 are each implemented in software that, when executed by a processor of the wireless device 14, causes the wireless device 14 to operate according to one of the embodiments described herein. The parameter determining module 58 operates to determine one or more parameters for a D2D communication link with a first wireless device 14. The quality estimating module 60 operates to determine one or more services supported over the D2D communication link with the first wireless device 14 based on the one or more parameters, as described above.

The following acronyms are used throughout this disclosure.

- 3G      3$^{rd}$ Generation
- 3GPP      3$^{rd}$ Generation Partnership Project
- 4G      4$^{th}$ Generation
- 5G      5$^{th}$ Generation
- BS      Base Station
- CC      Component Carrier
- D2D      Device-to-Device
- dB      decibel
- dBm      decibel-milliwatt
- eNB      evolved Node B
- EPS      Evolved Packet System
- IP      Internet Protocol
- LEE      Laptop Embedded Equipment
- LME      Laptop Mounted Equipment
- LTE      Long Term Evolution
- LTE-A      Long Term Evolution Advanced
- M2M      Machine-to-Machine
- MAC      Media Access Control
- MCS      Modulation and Coding Scheme
- MTC      Machine Type Communication
- PCell      Primary Cell
- PDN GW      Packet Data Network Gateway
- PHR      Power Headroom Report
- PHY      Physical
- PUCCH      Physical Uplink Control Channel
- PUSCH      Physical Uplink Shared Channel
- RB      Resource Block
- RE      Resource Element
- RRC      Radio Resource Control
- RS      Reference Signal
- RSRP      Reference Signal Received Power
- RSRQ      Reference Signal Received Quality
- RSSI      Received Signal Strength Indication
- SCell      Secondary Cell
- UE      User Equipment

(continued)

| • UMTS | Universal Mobile Telecommunications System |
| • USB | Universal Serial Bus |
| • WiMAX | Worldwide Interoperability for Microwave Access |

Those skilled in the art will recognize improvements and modifications to the embodiments of the present disclosure. All such improvements and modifications are considered within the scope of the invention, which is defined by the claims that follow.

**Claims**

1. A method of operation of a wireless device (14) in a wireless communications network (10) comprising:

    determining (100) one or more parameters for a Device-to-Device, D2D, communication link of the wireless device with a first wireless device; and
    determining (104) one or more services supported over the D2D communication link with the first wireless device based on the one or more parameters,
    wherein determining the one or more parameters for the D2D communication link comprises receiving an indication of a location of the first wireless device; the method further comprising:

       transmitting (108), to a second wireless device, an indication of the one or more services supported over the D2D communication link of the wireless device with the first wireless device;
       determining an available power budget for the wireless device; and
       transmitting, to the second wireless device, an indication of the available power budget for the wireless device,

    wherein the indication of the available power budget for the wireless device refers to a subframe in which the transmission takes place; and
    wherein the indication of the available power budget for the wireless device is based on a prediction of the available power budget for the subframe in which the transmission takes place.

2. The method of claim 1 further comprising determining (102) a quality of the D2D communication link of the wireless device with the first wireless device based on the one or more parameters; and wherein determining the one or more services supported over the D2D communication link of the wireless device with the first wireless device comprises determining the one or more services supported over the D2D communication link of the wireless device with the first wireless device based on the quality of the D2D communication link, optionally wherein the method further comprises:
   transmitting (106), to the second wireless device, an indication of the quality of the D2D communication link, where the wireless device has a second D2D communication link with the second wireless device.

3. The method of any preceding claim wherein determining the one or more parameters for the D2D communication link comprises receiving a Power Headroom Report, PHR, of the first wireless device for the D2D communication link.

4. The method of any preceding claim wherein the indication of the location of the first wireless device comprises an absolute location of the first wireless device (14), or wherein the indication of the location of the first wireless device comprises a relative location of the first wireless device in relation to the wireless device (14).

5. The method of any preceding claim wherein determining the one or more services supported over the D2D communication link comprises determining a tuple of services that are supported based on the quality of the D2D communication link.

6. The method of any preceding claim wherein determining the one or more parameters for the D2D communication link with the first wireless device comprises determining one or more of the group consisting of:

    a transmission rate for the D2D communication link with the first wireless device;

a latency for the D2D communication link with the first wireless device; and
a reliability of the D2D communication link with the first wireless device.

7. The method of any preceding claim further comprising:

   determining a quality of a plurality of D2D communication links between the wireless device and a plurality of wireless devices including the first wireless device; and
   selecting one or more wireless devices of the plurality of wireless devices to use as a communication path based on the quality of the plurality of D2D communication links.

8. The method of any preceding claim wherein the one or more parameters for the D2D communication link with the first wireless device indicate a number of additional Resource Blocks, RBs, that could be used by the first wireless device in order to provide at least one of:

   an increased transmission rate; and
   an increased reliability for the D2D communication link.

9. The method of claim 1, wherein the indication of the one or more services supported over the D2D communication link is provided to a user of the second wireless device, or wherein the indication of the one or more services supported over the D2D communication link is provided to an upper layer of the second wireless device for at least one of:

   enabling or disabling the transmission of one or more services to the second wireless device; and
   calibrating one or more transmission parameters for the transmission of one or more services to the second wireless device.

10. The method of claim 1, wherein transmitting the indication of the available power budget for the wireless device comprises transmitting, to the second wireless device on a direct control channel, the indication of the available power budget for the wireless device.

11. The method of claim 1 further comprising transmitting an indication of the available power budget for the wireless device for a specific carrier c, $P_{cmax,c}$.

12. A wireless device (14) in a wireless communications network (10) comprising:

    one or more processors (16); and
    memory (18) containing instructions executable by the one or more processors (16) whereby the wireless device (14) is operative to:

    determine one or more parameters for a Device-to-Device, D2D, communication link with a first wireless device; and
    determine one or more services supported over the D2D communication link with the first wireless device based on the one or more parameters,
    wherein determining the one or more parameters for the D2D communication link comprises receiving an indication of a location of the first wireless device;
    and whereby the wireless device is further configured to:

       transmit (108), to a second wireless device, an indication of the one or more services supported over the D2D communication link of the wireless device with the first wireless device;
       determine an available power budget for the wireless device; and
       transmit, to the second wireless device, an indication of the available power budget for the wireless device,

    wherein the indication of the available power budget for the wireless device refers to a subframe in which the transmission takes place; and
    wherein the indication of the available power budget for the wireless device is based on a prediction of the available power budget for the subframe in which the transmission takes place.

**Patentansprüche**

1. Verfahren zum Betreiben einer drahtlosen Vorrichtung (14) in einem drahtlosen Kommunikationsnetz (10), umfassend:

   Bestimmen (100) eines oder mehrerer Parameter für eine Device-to-Device-Kommunikationsverbindung, D2D-Kommunikationsverbindung, der drahtlosen Vorrichtung mit einer ersten drahtlosen Vorrichtung; und
   Bestimmen (104) eines oder mehrerer Dienste, die über die D2D-Kommunikationsverbindung mit der ersten drahtlosen Vorrichtung unterstützt werden, basierend auf einem oder mehreren Parametern,
   wobei Bestimmen des einen oder der mehreren Parameter für die D2D-Kommunikationsverbindung Empfangen einer Angabe eines Standorts der ersten drahtlosen Vorrichtung umfasst; wobei das Verfahren ferner umfasst:

   Übertragen (108) einer Angabe des einen oder der mehreren Dienste, die über die D2D-Kommunikationsverbindung der drahtlosen Vorrichtung mit der ersten drahtlosen Vorrichtung unterstützt werden, an eine zweite drahtlose Vorrichtung;
   Bestimmen eines verfügbaren Leistungsbudgets für die drahtlose Vorrichtung; und
   Übertragen einer Angabe des verfügbaren Leistungsbudgets für die drahtlose Vorrichtung an die zweite drahtlose Vorrichtung,

   wobei sich die Angabe des verfügbaren Leistungsbudgets für die drahtlose Vorrichtung auf einen Unterrahmen bezieht, in dem die Übertragung stattfindet; und
   wobei die Angabe des verfügbaren Leistungsbudgets für die drahtlose Vorrichtung auf einer Vorhersage des verfügbaren Leistungsbudgets für den Unterrahmen, in dem die Übertragung stattfindet, basiert.

2. Verfahren nach Anspruch 1, ferner umfassend Bestimmen (102) einer Qualität der D2D-Kommunikationsverbindung der drahtlosen Vorrichtung mit der ersten drahtlosen Vorrichtung basierend auf dem einen oder den mehreren Parametern; und wobei das Bestimmen des einen oder der mehreren Dienste, die über die D2D-Kommunikationsverbindung der drahtlosen Vorrichtung mit der ersten drahtlosen Vorrichtung unterstützt werden, das Bestimmen des einen oder der mehreren Dienste, die über die D2D-Kommunikationsverbindung der drahtlosen Vorrichtung mit der ersten drahtlosen Vorrichtung unterstützt werden, basierend auf der Qualität der D2D-Kommunikationsverbindung umfasst, wobei das Verfahren optional ferner umfasst:
   Übertragen (106) einer Angabe der Qualität der D2D-Kommunikationsverbindung an die zweite drahtlose Vorrichtung, wobei die drahtlose Vorrichtung eine zweite D2D-Kommunikationsverbindung mit der zweiten drahtlosen Vorrichtung aufweist.

3. Verfahren nach einem der vorstehenden Ansprüche, wobei das Bestimmen des einen oder der mehreren Parameter für die D2D-Kommunikationsverbindung Empfangen eines Leistungsreserveberichts, PHR, der ersten drahtlosen Vorrichtung für die D2D-Kommunikationsverbindung umfasst.

4. Verfahren nach einem der vorstehenden Ansprüche, wobei die Angabe des Standortes der ersten drahtlosen Vorrichtung einen absoluten Standort der ersten drahtlosen Vorrichtung (14) umfasst, oder wobei die Angabe des Standortes der ersten drahtlosen Vorrichtung einen relativen Standort der ersten drahtlosen Vorrichtung in Bezug auf die drahtlose Vorrichtung (14) umfasst.

5. Verfahren nach einem der vorstehenden Ansprüche, wobei das Bestimmen des einen oder der mehreren über die D2D-Kommunikationsverbindung unterstützten Dienste Bestimmen eines Tupels von Diensten umfasst, die basierend auf der Qualität der D2D-Kommunikationsverbindung unterstützt werden.

6. Verfahren nach einem der vorstehenden Ansprüche, wobei das Bestimmen des einen oder der mehreren Parameter für die D2D-Kommunikationsverbindung mit der ersten drahtlosen Vorrichtung Bestimmen eines oder mehrerer Parameter aus der Gruppe umfasst, bestehend aus:

   einer Übertragungsrate für die D2D-Kommunikationsverbindung mit der ersten drahtlosen Vorrichtung;
   einer Latenzzeit für die D2D-Kommunikationsverbindung mit der ersten drahtlosen Vorrichtung; und
   einer Zuverlässigkeit der D2D-Kommunikationsverbindung mit der ersten drahtlosen Vorrichtung.

7. Verfahren nach einem der vorstehenden Ansprüche, ferner umfassend:

Bestimmen einer Qualität einer Vielzahl von D2D-Kommunikationsverbindungen zwischen der drahtlosen Vorrichtung und einer Vielzahl von drahtlosen Vorrichtungen einschließlich der ersten drahtlosen Vorrichtung; und Auswählen einer oder mehrerer drahtloser Vorrichtungen der Vielzahl von drahtlosen Vorrichtungen, die als Kommunikationspfad basierend auf der Qualität der Vielzahl von D2D-Kommunikationsverbindungen verwendet werden sollen.

8. Verfahren nach einem der vorstehenden Ansprüche, wobei der eine oder die mehreren Parameter für die D2D-Kommunikationsverbindung mit der ersten drahtlosen Vorrichtung eine Anzahl von zusätzlichen Ressourcenblöcken, RBs, angeben, die von der ersten drahtlosen Vorrichtung genutzt werden könnten, um mindestens eines bereitzustellen von:

einer erhöhten Übertragungsrate; und
einer erhöhten Zuverlässigkeit für die D2D-Kommunikationsverbindung.

9. Verfahren nach Anspruch 1, wobei die Angabe des einen oder der mehreren über die D2D-Kommunikationsverbindung unterstützten Dienste einem Benutzer der zweiten drahtlosen Vorrichtung bereitgestellt wird, oder wobei die Angabe des einen oder der mehreren über die D2D-Kommunikationsverbindung unterstützten Dienste einer oberen Schicht der zweiten drahtlosen Vorrichtung für mindestens eines bereitgestellt wird von:

Aktivieren oder Deaktivieren der Übertragung eines oder mehrerer Dienste an die zweite drahtlose Vorrichtung; und
Kalibrieren eines oder mehrerer Übertragungsparameter für die Übertragung eines oder mehrerer Dienste an die zweite drahtlose Vorrichtung.

10. Verfahren nach Anspruch 1, wobei das Übertragen der Angabe des verfügbaren Leistungsbudgets für die drahtlose Vorrichtung Übertragen der Angabe des verfügbaren Leistungsbudgets für die drahtlose Vorrichtung an die zweite drahtlose Vorrichtung auf einem direkten Steuerkanal umfasst.

11. Verfahren nach Anspruch 1, ferner umfassend Übertragen einer Angabe des verfügbaren Leistungsbudgets für die drahtlose Vorrichtung für einen spezifischen Träger c, $P_{cmax,c}$.

12. Drahtlose Vorrichtung (14) in einem drahtlosen Kommunikationsnetz (10), umfassend:

einen oder mehrere Prozessoren (16); und
Speicher (18), der Befehle enthält, die von dem einen oder den mehreren Prozessoren (16) ausführbar sind, wobei die drahtlose Vorrichtung (14) betriebsfähig ist zum:

Bestimmen eines oder mehrerer Parameter für eine Device-to-Device-Kommunikationsverbindung, D2D-Kommunikationsverbindung, mit einer ersten drahtlosen Vorrichtung; und
Bestimmen eines oder mehrerer Dienste, die über die D2D-Kommunikationsverbindung mit der ersten drahtlosen Vorrichtung unterstützt werden, basierend auf dem einem oder den mehreren Parametern,

wobei Bestimmen des einen oder der mehreren Parameter für die D2D-Kommunikationsverbindung Empfangen einer Angabe eines Standortes der ersten drahtlosen Vorrichtung umfasst;
und wobei die drahtlose Vorrichtung ferner konfiguriert ist zum:

Übertragen (108) einer Angabe des einen oder der mehreren Dienste, die über die D2D-Kommunikationsverbindung der drahtlosen Vorrichtung mit der ersten drahtlosen Vorrichtung unterstützt werden, an eine zweite drahtlose Vorrichtung;
Bestimmen eines verfügbaren Leistungsbudgets für die drahtlose Vorrichtung; und
Übertragen einer Angabe des verfügbaren Leistungsbudgets für die drahtlose Vorrichtung an die zweite drahtlose Vorrichtung,

wobei sich die Angabe des verfügbaren Leistungsbudgets für die drahtlose Vorrichtung auf einen Unterrahmen bezieht, in dem die Übertragung stattfindet; und
wobei die Angabe des verfügbaren Leistungsbudgets für die drahtlose Vorrichtung auf einer Vorhersage des verfügbaren Leistungsbudgets für den Unterrahmen, in dem die Übertragung stattfindet, basiert.

**Revendications**

1. Procédé de fonctionnement d'un dispositif sans fil (14) dans un réseau de communications sans fil (10) comprenant :

   la détermination (100) d'un ou plusieurs paramètres pour une liaison de communication de dispositif à dispositif, D2D, du dispositif sans fil avec un premier dispositif sans fil ; et
   la détermination (104) d'un ou plusieurs services supportés sur la liaison de communication D2D avec le premier dispositif sans fil sur la base du ou des paramètres,
   dans lequel la détermination du ou des paramètres pour la liaison de communication D2D comprend la réception d'une indication d'une localisation du premier dispositif sans fil ; le procédé comprenant en outre :

      la transmission (108), à un deuxième dispositif sans fil, d'une indication du ou des services supportés sur la liaison de communication D2D du dispositif sans fil avec le premier dispositif sans fil ;
      la détermination d'un budget de puissance disponible pour le dispositif sans fil ; et
      la transmission, au deuxième dispositif sans fil, d'une indication du budget de puissance disponible pour le dispositif sans fil,

   dans lequel l'indication du budget de puissance disponible pour le dispositif sans fil fait référence à une sous-trame dans laquelle se déroule la transmission ; et
   dans lequel l'indication du budget de puissance disponible pour le dispositif sans fil est basée sur une prévision du budget de puissance disponible pour la sous-trame dans laquelle se déroule la transmission.

2. Procédé selon la revendication 1 comprenant en outre la détermination (102) d'une qualité de la liaison de communication D2D du dispositif sans fil avec le premier dispositif sans fil sur la base du ou des paramètres ; et dans lequel la détermination du ou des services supportés sur la liaison de communication D2D du dispositif sans fil avec le premier dispositif sans fil comprend la détermination du ou des services supportés sur la liaison de communication D2D du dispositif sans fil avec le premier dispositif sans fil sur la base de la qualité de la liaison de communication D2D, facultativement dans lequel le procédé comprend en outre :
   la transmission (106), au deuxième dispositif sans fil, d'une indication de la qualité de la liaison de communication D2D, où le dispositif sans fil a une deuxième liaison de communication D2D avec le deuxième dispositif sans fil.

3. Procédé selon une quelconque revendication précédente dans lequel la détermination du ou des paramètres pour la liaison de communication D2D comprend la réception d'un rapport de marge de puissance, PHR, du premier dispositif sans fil pour la liaison de communication D2D.

4. Procédé selon une quelconque revendication précédente dans lequel l'indication de la localisation du premier dispositif sans fil comprend une localisation absolue du premier dispositif sans fil (14), ou dans lequel l'indication de la localisation du premier dispositif sans fil comprend une localisation relative du premier dispositif sans fil par rapport au dispositif sans fil (14).

5. Procédé selon une quelconque revendication précédente dans lequel la détermination du ou des services supportés sur la liaison de communication D2D comprend la détermination d'un multiplet de services qui sont supportés sur la base de la qualité de la liaison de communication D2D.

6. Procédé selon une quelconque revendication précédente dans lequel la détermination du ou des paramètres pour la liaison de communication D2D avec le premier dispositif sans fil comprend la détermination d'un ou plusieurs parmi le groupe constitué de :

   un débit de transmission pour la liaison de communication D2D avec le premier dispositif sans fil ;
   une latence pour la liaison de communication D2D avec le premier dispositif sans fil ; et
   une fiabilité de la liaison de communication D2D avec le premier dispositif sans fil.

7. Procédé selon une quelconque revendication précédente comprenant en outre :

   la détermination d'une qualité d'une pluralité de liaisons de communication D2D entre le dispositif sans fil et une pluralité de dispositifs sans fil incluant le premier dispositif sans fil ; et
   la sélection d'un ou plusieurs dispositifs sans fil de la pluralité de dispositifs sans fil à utiliser comme trajet de communication sur la base de la qualité de la pluralité de liaisons de communication D2D.

**8.** Procédé selon une quelconque revendication précédente dans lequel le ou les paramètres pour la liaison de communication D2D avec le premier dispositif sans fil indiquent un nombre de blocs de ressource, RB, supplémentaires qui pourraient être utilisés par le premier dispositif sans fil afin de fournir au moins l'un parmi :

un débit de transmission accru ; et
une fiabilité accrue pour la liaison de communication D2D.

**9.** Procédé selon la revendication 1, dans lequel l'indication du ou des services supportés sur la liaison de communication D2D est fournie à un utilisateur du deuxième dispositif sans fil, ou dans lequel l'indication du ou des services supportés sur la liaison de communication D2D est fournie à une couche supérieure du deuxième dispositif sans fil pour au moins l'un parmi :

l'activation ou la désactivation de la transmission d'un ou plusieurs services au deuxième dispositif sans fil ; et
l'étalonnage d'un ou plusieurs paramètres de transmission pour la transmission d'un ou plusieurs services au deuxième dispositif sans fil.

**10.** Procédé selon la revendication 1, dans lequel la transmission de l'indication du budget de puissance disponible pour le dispositif sans fil comprend la transmission, au deuxième dispositif sans fil sur un canal de commande direct, de l'indication du budget de puissance disponible pour le dispositif sans fil.

**11.** Procédé selon la revendication 1 comprenant en outre la transmission d'une indication du budget de puissance disponible pour le dispositif sans fil pour une porteuse spécifique c, $P_{cmax,c}$.

**12.** Dispositif sans fil (14) dans un réseau de communications sans fil (10) comprenant :

un ou plusieurs processeurs (16) ; et
une mémoire (18) contenant des instructions exécutables par le ou les processeurs (16) moyennant quoi le dispositif sans fil (14) est en mesure de :

déterminer un ou plusieurs paramètres pour une liaison de communication de dispositif à dispositif, D2D, avec un premier dispositif sans fil ; et
déterminer un ou plusieurs services supportés sur la liaison de communication D2D avec le premier dispositif sans fil sur la base du ou des paramètres,

dans lequel la détermination du ou des paramètres pour la liaison de communication D2D comprend la réception d'une indication d'une localisation du premier dispositif sans fil ;
et moyennant quoi le dispositif sans fil est en outre configuré pour :

transmettre (108), à un deuxième dispositif sans fil, une indication du ou des services supportés sur la liaison de communication D2D du dispositif sans fil avec le premier dispositif sans fil ;
déterminer un budget de puissance disponible pour le dispositif sans fil ; et
transmettre, au deuxième dispositif sans fil, une indication du budget de puissance disponible pour le dispositif sans fil,

dans lequel l'indication du budget de puissance disponible pour le dispositif sans fil fait référence à une sous-trame dans laquelle se déroule la transmission ; et
dans lequel l'indication du budget de puissance disponible pour le dispositif sans fil est basée sur une prévision du budget de puissance disponible pour la sous-trame dans laquelle se déroule la transmission.

FIG. 1

**FIG. 2**

EP 3 278 615 B1

```
┌─────────────────────────────────────────────┐
│ DETERMINE ONE OR MORE PARAMETERS FOR A D2D   │── 100
│ COMMUNICATION LINK WITH A FIRST WIRELESS     │
│ DEVICE E.G., PHR, TRANSMISSION RATE, LATENCY,│
│ RELIABILITY, LOCATION                        │
└─────────────────────────────────────────────┘
                      │
                      ▼
┌─────────────────────────────────────────────┐
│ DETERMINE A QUALITY OF THE D2D               │── 102
│ COMMUNICATION LINK WITH THE FIRST WIRELESS   │
│ DEVICE BASED ON THE ONE OR MORE PARAMETERS   │
└─────────────────────────────────────────────┘
                      │
                      ▼
┌─────────────────────────────────────────────┐
│ DETERMINE ONE OR MORE SERVICES SUPPORTED     │── 104
│ OVER THE D2D COMMUNICATION LINK WITH THE     │
│ FIRST WIRELESS DEVICE BASED ON THE QUALITY OF│
│ THE D2D COMMUNICATION LINK                   │
└─────────────────────────────────────────────┘
                      │
                      ▼
┌ ─ ─ ─ ─ ─ ─ ─ ─ ─ ─ ─ ─ ─ ─ ─ ─ ─ ─ ─ ─ ─ ─ ┐
│ TRANSMIT, TO A THIRD WIRELESS DEVICE, AN     │── 106
│ INDICATION OF THE QUALITY OF THE D2D         │
│ COMMUNICATION LINK, WHERE THE WIRELESS       │
│ DEVICE HAS A D2D COMMUNICATION LINK WITH THE │
│ THIRD WIRELESS DEVICE                        │
└ ─ ─ ─ ─ ─ ─ ─ ─ ─ ─ ─ ─ ─ ─ ─ ─ ─ ─ ─ ─ ─ ─ ┘
                      │
                      ▼
┌ ─ ─ ─ ─ ─ ─ ─ ─ ─ ─ ─ ─ ─ ─ ─ ─ ─ ─ ─ ─ ─ ─ ┐
│ TRANSMIT, TO THE THIRD WIRELESS DEVICE, AN   │── 108
│ INDICATION OF THE ONE OR MORE SERVICES       │
│ SUPPORTED OVER THE D2D COMMUNICATION LINK    │
│ WITH THE FIRST WIRELESS DEVICE               │
└ ─ ─ ─ ─ ─ ─ ─ ─ ─ ─ ─ ─ ─ ─ ─ ─ ─ ─ ─ ─ ─ ─ ┘
```

**FIG. 3**

UE1
14-1

UE2
14-2

200. EVALUATE AN AVAILABLE POWER BUDGET

202. PHR

204. PERFORM RADIO MEASUREMENT

206. ESTIMATE LINK QUALITY

208. IDENTIFY SUPPORTED SERVICES

FIG. 4

**FIG. 5**

EP 3 278 615 B1

FIG. 6

14

58

MEMORY
50

PROCESSOR(S)
48

TRANSCEIVER
52

TX(S)
54

RX(S)
56

58

**FIG. 7**

WIRELESS DEVICE
14

PARAMETER DETERMINING MODULE
58

QUALITY ESTIMATING MODULE
60

**FIG. 8**

**REFERENCES CITED IN THE DESCRIPTION**

**Patent documents cited in the description**

- US 20030204587 A1